# EUROPÄISCHE PATENTSCHRIFT

(11) **EP 2 932 677 B1**
(45) Veröffentlichungstag und Bekanntmachung des Hinweises auf die Patenterteilung: **03.05.2017**
(21) Anmeldenummer: 13750062.5
(22) Anmeldetag: 15.08.2013
(51) Int. Cl.: H04L 29/06

(54) **VERFAHREN FÜR DIE SICHERE ÜBERTRAGUNG EINER DIGITALEN NACHRICHT**
METHOD FOR SECURE TRANSMISSION OF A DIGITAL MESSAGE
PROCEDE DE TRANSMISSION SECURISEE D'UN MESSAGE ELECTRONIQUE

(30) Priorität: 12.12.2012 DE 102012222995
(43) Veröffentlichungstag der Anmeldung: 21.10.2015
(73) Patentinhaber: Deutsche Post AG, 53113 Bonn (DE)
(72) Erfinder: BOBINSKI, Mike, 53113 Bonn (DE); PABEL, Jürgen, 50858 Köln (DE)
(74) Vertreter: Jostarndt Patentanwalts-AG
(86) Internationale Anmeldenummer: PCT/EP2013/067088
(87) Internationale Veröffentlichungsnummer: WO 2014/090423

(56) Entgegenhaltungen:
- WO-A1-03/050774
- WO-A2-2006/078558
- nn: "De-Mail Sicherer elektronischer Datenverkehr - einfach und nachweisbar", Bundesamt für Sicherheit in der Informationstechnik , 12. März 2012 (2012-03-12), XP002715696, Gefunden im Internet: URL:https://www.bsi.bund.de/SharedDocs/Dow nloads/DE/BSI/Egovernment/De_Mail/De-Mail- Broschuere.pdf?__blob=publicationFile [gefunden am 2013-10-30]
- nn: "Trust Center Pcoket Guide 2011", Bundesdruckerei , 31. August 2011 (2011-08-31), XP002715697, Gefunden im Internet: URL:http://www.bundesdruckerei.de/sites/de fault/files/pocketguide_trustcenter.pdf [gefunden am 2013-10-30]

## Beschreibung

Die Erfindung betrifft ein Verfahren für die sichere Übertragung einer digitalen Nachricht.

Informationen können heutzutage digital, beispielsweise als Email, versendet werden. Dabei eignet sich der Emailversand aus diversen Gründen nicht für vertrauliche Informationen. Zum einen sind weder Absender, noch Empfänger zweifelsfrei identifizierbar. Das bedeutet, dass der Empfänger einer Email nicht sicher sein kann, dass der Absender tatsächlich die Person oder Institution ist, die als Absender angegeben ist. Zum anderen wird die Information offen übertragen, was bedeutet, dass Fehlläufer von dem irrtümlichen Empfänger gelesen werden können. Zusätzlich kann der Provider der Emailfunktion, über dessen Server die Email übertragen wird, die Information aus der Email zur Kenntnis nehmen.

Zur Lösung dieser Probleme etablieren sich zurzeit sicherere Dienste zur elektronischen Informationsübermittlung verschiedener Anbieter. Beispielsweise bietet die Anmelderin mit dem E-Postbrief ein Verfahren zur sicheren Übertragung digitaler Informationen an. Sowohl Absender, als auch Empfänger müssen sich einmalig sicher, beispielsweise persönlich, authentifizieren. Dazu ist während der Anmeldung ein Postldent-Nachweis, also das persönliche Vorlegen eines Lichtbildausweises bei einer Post-Filiale Voraussetzung. Im Rahmen der Anmeldung wird dem angehenden Nutzer mittels HandyTAN-Verfahren eine sechsstellige Transaktionsnummer per SMS auf sein Mobiltelefon geschickt. Auch bei der Nutzung des E-Postbrief-Portals kommt dieses Verfahren zum Einsatz. Zur eindeutigen Identifizierung des Nutzers erfolgt später noch die Bestätigung des Hauptwohnsitzes durch eine erneute Zustellung einer sechsstelligen HandyTAN sowie der Eingabe einer per Brief zugestellten einmaligen sechsstelligen AdressTAN, die im E-Postbrief-Portal eingegeben wird. Der E-Postbrief selbst ist ein Hybridpostdienst mit angeschlossener Website. Über ein verschlüsseltes Webportal können elektronische Nachrichten als Online-Brief zwischen Kunden des E-Postbrief-Dienstes versendet werden. Zur Verschlüsselung werden dabei übliche Verfahren, wie beispielsweise das Secure-Sockets-Layer-(SSL)-Verschlüsselungsverfahren verwendet.

Das E-Postbrief Portal sichert durch eine HTTPS(HyperText Transfer Protocol Secure)-Verschlüsselung die Kommunikation zwischen Benutzer und Betreiber. Daher ist der Transportkanal verschlüsselt, wobei sich diese Verschlüsselung nicht auf die Nachricht erstreckt. Liegt diese im Klartext vor, so wird diese auch im Klartext auf dem Portalserver empfangen.

Es gibt Berufsgruppen, die die ihnen anvertrauten Berufsgeheimnisse gegenüber Dritten geheim halten müssen. Beispielsweise fallen Ärzte und Anwälte in diese Berufsgruppen. Diese sogenannten Berufsgeheimnisträger dürfen somit einen Dienst wie den E-Postbrief für die Versendung solcher Informationen nicht nutzen. Es herrscht aber die Rechtsauffassung, dass sogenannte Ende-zu-Ende Verschlüsselungstechnologien von Berufsgeheimnisträgern zur Kommunikation genutzt werden dürfen. Das Grundprinzip einer Ende-zu-Ende Verschlüsselung besteht darin, dass die zu schützende Nachricht mit einem nur den Kommunikationsparteien bekannten Schlüssel kryptographisch gesichert ist. Dieser Schlüssel muss dem Absender vom Empfänger vor dem Versand der Nachricht mitgeteilt werden. Es existieren am Markt bereits diverse Lösungen für Kommunikationspartner, um eine Ende-zu-Ende Verschlüsselung umzusetzen. Allerdings setzen diese immer voraus, dass der Empfänger seinen Schlüssel eigenständig verwaltet und schützt, sowie dem Absender den zur Verschlüsselung notwendigen Schlüssel zugänglich macht. Grundsätzlich sind symmetrische und asymmetrische Verschlüsselungsverfahren bekannt. Bei symmetrischen Verschlüsselungsverfahren werden Verschlüsselung und Entschlüsselung mit dem gleichen Schlüssel durchgeführt. Versendet ein Sender eine mit einem symmetrischen Verfahren verschlüsselte Nachricht, und soll der Empfänger diese Nachricht wieder entschlüsseln können, muss er also über den gleichen Schlüssel verfügen. Andere Verfahren, bei denen zwar die beiden Schlüssel nicht identisch sind, aber leicht auseinander berechnet werden können, werden ebenfalls unter die symmetrischen Verfahren gezählt. Zu den asymmetrischen Verfahren gehören im Gegensatz dazu die Public-Key-Verschlüsselungsverfahren. Dies ist ein asymmetrisches Verschlüsselungsverfahren, bei dem mit einem öffentlichen Schlüssel ein Klartext in einen Geheimtext umgewandelt wird, um aus ihm den Klartext mit einem geheimen Schlüssel wieder zu gewinnen. Dabei stellt der öffentliche Schlüssel kein Geheimnis dar. Bei symmetrischen Verfahren hingegen muss die Weitergabe an den Absender über einen gesicherten Kanal erfolgen. Weiterhin wird bei den existierenden Lösungen immer vorausgesetzt, dass der Empfänger zumindest Softwaremodule auf seinem Endgerät installiert. Oftmals sind zur Entschlüsselung einer verschlüsselten Nachricht auch zusätzliche Geräte erforderlich. Die Druckschrift WO03/050774-A1 lehrt ein Verfahren für die Übertragung einer digitalen Nachricht, wobei kryptographische Techniken in Anspruch genommen werden. Aufgabe der Erfindung ist es, ein Verfahren für die sichere Übertragung einer digitalen Nachricht anzugeben, das die Sicherheitseigenschaften einer Ende-zu-Ende Verschlüsselung gewährleistet, ohne dabei jedoch die üblicherweise erforderlichen Technologieanforderungen und notwendigen organisatorischen Maßnahmen auf Empfängerseite vorauszusetzen, insbesondere ohne zusätzliche Geräte oder PC-Ausstattung wie beispielsweise Kartenlesegeräte oder NFC (Near Field Communication)-Module auf Empfängerseite vorauszusetzen. Erfindungsgemäß wird diese Aufgabe durch ein Verfahren mit den Merkmalen des unabhängigen Anspruches 1 gelöst. Vorteilhafte Weiterbildungen des Verfahrens ergeben sich aus den Unteransprüchen 2-15.

Das erfinderische Verfahren für die sichere Übertragung einer digitalen Nachricht mittels eines elektronischen Postdienstes setzt voraus, dass der Nutzer des Dienstes über einen Computer mit einem darauf lauffähigen Browser und einem Internetanschluss verfügt und der elektronische Postdienst ein TrustCenter nutzt, wobei auf dem TrustCenter ein asymmetrisches Verschlüsselungsverfahren installiert ist. Unter Computer wird hier und im Weiteren jeder Computer verstanden, der mit dem Internet kommunizieren kann, wozu auf dem Computer ein Browser zur Anzeige von Seiten aus dem Internet installiert ist. Unter einem TrustCenter wird hier und im Folgenden eine vertrauenswürdige dritte Instanz verstanden, welche Schlüssel nach dem Stand der Technik erzeugt und sicher verwaltet. TrustCenter unterliegen eigenen Standards und werden regelmäßig vom Bundesamt für Sicherheit in der Informationstechnik überprüft. Weiterhin besitzt der Nutzer einen eindeutigen User-Namen, mit dem er sich bei dem elektronischen Postdienst anmeldet.

Zunächst legt der Nutzer ein Passwort unter Nutzung seines Browsers fest. Aus diesem Passwort wird mittels einer kryptografischen Ableitung ein User-Passwort-Verifier generiert. Dieser User-Passwort-Verifier stellt ein Datum zur Authentisierung des Nutzers des elektronischen Postdienstes dar. Bei der kryptografischen Ableitung kann beispielsweise ein Hash-Verfahren zur Anwendung kommen. Dabei wird über eine sogenannte Hashfunktion aus einer Zeichenfolge beliebiger Länge eine Zeichenfolge mit fester Länge generiert. Es ist praktisch unmöglich, zu einem gegebenen Ausgabewert einer Hashfunktion einen Eingabewert zu finden, den die Hashfunktion abbildet. Weiterhin ist es praktisch unmöglich, für einen gegebenen Wert einen davon verschiedenen zweiten Wert zu finden, der denselben Hashwert ergibt, wie es darüber hinaus praktisch unmöglich ist, zwei verschiedene Eingabewerte zu finden, die denselben Hashwert ergeben. Der User-Passwort-Verifier wird an den elektronischen Postdienst übertragen und auf einem Speichermedium des elektronischen Postdienstes beispielsweise in einer Datenbank gespeichert. Aus dem Passwort wird durch kryptografische Ableitung ein User-Secret generiert. Dabei stellt das User-Secret den symmetrischen Schlüssel zur Verschlüsselung eines benutzereigenen Nachrichtenschlüssels dar. Das User-Secret wird mit dem Public Key des TrustCenters verschlüsselt und das verschlüsselte User-Secret an den elektronischen Postdienst übertragen, wovon es weiter an das TrustCenter übertragen wird, wobei der elektronische Postdienst einen Funktionsaufruf zur Generierung eines User-Master-Secrets an das TrustCenter sendet. Im TrustCenter wird das User-Secret entschlüsselt und ein User-Master-Secret generiert. Weiterhin wird im TrustCenter eine User-ID generiert, wobei die User-ID ein eindeutiges Identitätsdatum darstellt, das zur Zuordnung des entsprechenden User-Master-Secrets zwischen dem elektronischen Postdienst und dem TrustCenter verwendet wird. Das TrustCenter kennt ausschließlich die User-ID, nicht aber die Zuordnung auf den beim elektronischen Postdienst damit assoziierten User-Namen. Nun wird im TrustCenter das User-Master-Secret mit dem User-Secret verschlüsselt und die User-ID und das mit dem User-Secret verschlüsselte User-Master-Secret vom TrustCenter an den elektronischen Postdienst übertragen, wo die User-ID und das mit dem User-Secret verschlüsselte User-Master-Secret gespeichert wird.

Dieses Verfahren gewährleistet, dass der elektronische Postdienst keine Kenntnis des User-Master-Secrets erlangen kann und lediglich als Verwalter im Sinne von Speicherung des verschlüsselten User-Master-Secrets und eines nicht geheimen Zertifikates auftritt. Dieses Zertifikat kann vollkommen anonym sein oder alternativ Empfängerdaten, beispielsweise eine digitale Empfangsadresse, physische Anschrift des Empfängers und/oder weitere personenbezogene Daten, beinhalten.

In einer vorteilhaften Ausführungsform des erfinderischen Verfahrens wird nach der Verschlüsselung des User-Master-Secrets mit dem User-Secret im TrustCenter das User-Master-Secret mit der User-ID im TrustCenter verschlüsselt und anschließend ein Hash-Wert aus der User-ID im TrustCenter abgeleitet; woraufhin das verschlüsselte User-Master-Secret und der aus der User-ID abgeleitete Hash-Wert im TrustCenter gespeichert wird. Anschließend werden das unverschlüsselte Unser-Master-Secret und die User-ID im TrustCenter gelöscht.

Es hat sich als vorteilhaft herausgestellt, wenn der elektronische Postdienst über ein Portal im Internet erreichbar ist. Das Portal kann eine Login-Maske bereitstellen, in die der User-Name und ein User-Passwort eingebbar sind.

In einer vorteilhaften Ausführungsform wird die Übertragung des User-Namens und des User-Passwort-Verifiers von dem Computer des Nutzers an den elektronischen Postdienst über ein challenge-response basiertes Verfahren durchgeführt. Ein challenge-response basiertes Verfahren ist dabei ein sicheres passwortbasiertes Authentifikations- und Schlüsselaustauschprotokoll. In einer weiteren vorteilhaften Ausführungsform wird das SRP-Verfahren als Challenge-Response basiertes Verfahren für die Übertragung des User-Namens und des User-Passwort-Verifiers von dem Computer des Nutzers an den elektronischen Postdienst benutzt. Das Verfahren gewährleistet, dass der elektronische Postdienst das User-Passwort nicht mehr in Erfahrung bringen kann, da es im Rahmen der Initialisierung, das heißt Registrierung und Authentisierung, dem Login, nicht an den elektronischen Postdienst übertragen wird. Es werden ausschließlich kryptographische Ableitungen des User-Passworts vom Browser übertragen. Somit stellt das User-Passwort ein Geheimnis dar, welches ausschließlich dem Portalbenutzer bekannt ist.

Um eine Trennung zwischen Schlüsselverwaltung und Datenspeicherung zu gewährleisten, wird die Schlüsselverwaltung an eine aus Sicht des elektronischen Postdienstes dritte Partei ausgelagert. Damit wird gewährleistet, dass keine Partei eigenständig Zugriff auf Schlüssel und Daten erhält.

Passwortänderungen durch den Nutzer sind gemäß der folgenden Ausführungsform des erfinderischen Verfahrens möglich:
Passwortänderungen sind ausschließlich im eingeloggten Zustand möglich, wobei der Browser das User-Master-Secret bereits im Zugriff hat. Der Nutzer gibt zunächst das neue Passwort unter Nutzung des Browsers ein und validiert es. Anschließend wird im Browser des Nutzers ein User-Passwort-Verifier aus dem neuen Passwort kryptographisch abgeleitet, woraufhin es an den elektronischen Postdienst übertragen und auf einem Speichermedium des elektronischen Postdienstes gespeichert wird, wobei der alte User-Passwort-Verifier ersetzt wird. Anschließend wird das verschlüsselte User-Master-Secret von dem elektronischen Postdienst abgerufen und von dem elektronischen Postdienst in den Browser auf den Computer des Nutzers übertragen. Nun wird ein neues User-Secret aus dem neuen Passwort kryptografisch abgeleitet, woraufhin das User-Master-Secret mit dem alten User-Secret entschlüsselt wird und anschließend mit dem neuen User-Secret wieder verschlüsselt wird. Das neu verschlüsselte User-Master-Secret wird nun zu dem elektronischen Postdienst übertragen, wo es auf einem Speichermedium gespeichert wird, wobei das alte User-Master-Secret ersetzt wird.

Eine Passwortänderung führt zu einem anderen User-Secret, da es sich direkt aus dem User-Passwort ableitet. Bei einer Passwortänderung wird das User-Master-Secret mit dem neuen User-Secret im Browser verschlüsselt und zur Speicherung an den elektronischen Postdienst übertragen. Eine Interaktion mit dem TrustCenter ist nicht notwendig.

Ist einem Nutzer des elektronischen Postdiensts das aktuelle User-Passwort nicht mehr bekannt, beispielsweise weil er es vergessen hat, oder ist die Authentisierung des Nutzers des elektronischen Postdiensts mittels dieses Passwortes beispielsweise nach dreimaliger Falscheingabe gesperrt, so kann sich der Nutzer nicht mehr mit diesem Passwort anmelden. Da ohne dieses Passwort das davon abgeleitete User-Secret nicht berechnet werden kann, ist das in der Benutzerdatenbank des elektronischen Postdiensts hinterlegte verschlüsselte User-Master-Secret des Benutzers somit nicht mehr entschlüsselbar. Will in diesem Falle der Nutzer auf bereits empfangene verschlüsselte Nachrichteninhalte zugreifen, muss ein Key-Recovery Verfahren eingeleitet werden.

Um ein Key-Recovery zu ermöglichen, werden die generierten Daten von dem TrustCenter nicht verworfen, sondern gesichert gespeichert. Das TrustCenter selbst hat hierbei keinerlei Informationen zum Personenbezug der generierten Daten. Das neu generierte User-Master-Secret wird mit der User-ID verschlüsselt und das Ergebnis unter Angabe eines Hash-Wertes der User-ID in einer Datenbank gespeichert. Die Passwortrücksetzung ist dabei nach einem Verfahren gemäß der folgenden Ausführungsform möglich: Der Nutzer fordert ein Entsperrpasswort mit Hilfe seines Browsers bei dem elektronischen Postdienst an. Der elektronische Postdienst generiert kryptographisch ein Entsperrpasswort und stellt es dem Nutzer auf postalischem Weg zu. Nach Erhalt dieses Entsperrpasswortes kann sich der Nutzer wieder am Portal des elektronischen Postdienstes anmelden. Dabei wird das Entsperrpasswort an den elektronischen Postdienst übermittelt. Falls das Entsperrpasswort korrekt eingegeben wurde, erfolgt eine Rückmeldung des elektronischen Postdienstes an den Browser des Nutzers, dass das Entsperrpasswort korrekt ist, und es wird eine Aufforderung zur Eingabe eines neuen Passwortes im Browser des Nutzers angezeigt. Andernfalls erfolgt eine Rückmeldung des elektronischen Postdienstes an den Browser des Nutzers, dass das Entsperrpasswort nicht korrekt ist, und das Verfahrens wird abgebrochen oder der Nutzer wird nochmals zur korrekten Eingabe des Entsperrpassworts aufgefordert, wobei ein Abbruch des Verfahrens beispielsweise nach dreimaliger Falscheingabe erfolgt. War die Eingabe des Entsperrpassworts erfolgreich, kann der Nutzer unter Nutzung seines Browsers ein neues Passwort eingeben und validieren. Anschließend erfolgen die kryptographische Ableitung eines neuen User-Passwort-Verifiers aus dem neuen Passwort und die Übertragung des User-Passwort-Verifiers an den elektronischen Postdienst, wo der User-Passwort-Verifier unter Ersetzung des alten User-Passwort-Verifiers auf einem Speichermedium gespeichert wird. Nun wird ein neues User-Secret aus dem neuen Passwort im Browser des Nutzers kryptographisch abgeleitet und mit dem Public Key des TrustCenters verschlüsselt und an den elektronischen Postdienst übertragen. Daraufhin wird eine Aufforderung zur Key-Recovery mit der User-ID des Nutzers vom elektronischen Postdienst an das TrustCenter übertragen, wo aus der User-ID ein Hash-Wert abgeleitet wird. Anschließend wird im TrustCenter das verschlüsselte User-Master-Secret mit dem Hash-Wert der User-ID gesucht und nach dem Auffinden mit der User-ID entschlüsselt. Das neue User-Secret wird mit dem Private Key des TrustCenters im TrustCenter entschlüsselt und das User-Master-Secret mit dem neuen User-Secret im TrustCenter verschlüsselt. Daraufhin wird das neue verschlüsselte User-Master-Secret vom TrustCenter an den elektronischen Postdienst übermittelt, wo es das alte verschlüsselte User-Master-Secret ersetzt. Zum Schluss wird das neue verschlüsselte User-Master-Secret vom elektronischen Postdienst an den Browser des Nutzers übertragen.

Für die Übertragung der geheimen Nachricht kann eine Nachricht mit einem verschlüsselten Anhang innerhalb einer mittels sicherer Übertragung übertragenen digitalen Nachricht gewählt werden, wobei die geheime Nachricht sich in dem Anhang befindet. Ein solcher verschlüsselter Anhang kann angezeigt werden, indem die Nachricht in dem Browser des Nutzers angezeigt wird, wobei der Nutzer darüber informiert wird, ob die Nachricht einen Anhang enthält. Der Nutzer ruft den Anhang von dem elektronischen Postdienst ab, woraufhin der verschlüsselte Anhang von dem elektronischen Postdienst auf den Computer des Nutzers übertragen wird. Dort wird durch den Browser des Nutzers die Verschlüsselung erkannt und das verschlüsselte User-Master-Secret von dem Speichermedium des elektronischen Postdienstes angefordert. Nach der Übertragung des verschlüsselten User-Master-Secrets von dem Speichermedium des elektronischen Postdienstes auf den Computer des Nutzers wird das User-Master-Secret mit dem User-Secret innerhalb des Browsers des Nutzers entschlüsselt, anschließend der Anhang mit dem User-Master-Secret ebenfalls innerhalb des Browsers des Nutzers entschlüsselt und der Anhang in Klarschrift innerhalb des Browsers des Nutzers angezeigt.

Alternativ kann auch die gesamte Nachricht verschlüsselt sein. In diesem Fall wird in dem Browser des Nutzers zunächst nur der unverschlüsselte Nachrichtenkopf angezeigt. Die Nachricht selbst wird als verschlüsselt identifiziert, woraufhin das verschlüsselte User-Master-Secret aus den Nutzerdaten aus dem elektronischen Postdienst abgerufen wird. Im Browser des Nutzers wird das User-Master-Secret mit dem User-Secret entschlüsselt und danach die Nachricht mit dem User-Master-Secret entschlüsselt, so dass die Nachricht anschließend in Klarschrift anzeigbar ist.

Für die Verschlüsselung der Nachricht kann alternativ ein asymmetrischer oder ein symmetrischer Schlüssel verwendet werden. Bei der Alternative mit asymmetrischer Verschlüsselung wird für jeden Empfänger ein eigenes asymmetrisches Schlüsselpaar generiert und der öffentliche Schlüssel in einem Zertifikat dem Absender bereitgestellt. In dem elektronischen Postdienst sind Empfängerstammdaten gespeichert, wobei der öffentliche Schlüssel im TrustCenter mit dem Zertifikat versehen wird und dieses Zertifikat zusammen mit dem verschlüsselten User-Master-Secret vom TrustCenter an den elektronischen Postdienst weitergeleitet wird, wo es unter den Empfängerstammdaten abgelegt wird. Der Absender verschlüsselt das schützenswerte Dokument vor Versand über den elektronischen Postdienst noch innerhalb seines Machtbereiches. Dem Empfänger wird das verschlüsselte Dokument in verschlüsselter Form auf seinen Browser und somit in seinen Machtbereich übertragen und erst dort entschlüsselt. Dabei kann der elektronische Postdienst als Transportmedium der Nachrichten auf die eingesetzten privaten Schlüssel nicht zugreifen und die geschützte Nachricht daher nicht lesen. Dadurch wird gewährleistet, dass Berufsgeheimnisträger ihre Berufsgeheimnisse nicht gegenüber Dritten, auch nicht gegenüber dem elektronischen Postdienst offenlegen.

Das alternative Verfahren mit einer symmetrischen Nachrichtenverschlüsselung stellt kleinere Anforderungen an die Leistungsfähigkeit der verwendeten Computer. Da das User-Master-Secret in diesem Szenario statt eines asymmetrischen Schlüssels einen symmetrischen Schlüssel darstellt, existiert kein nicht-schützenswertes Gegenstück im Sinne eines öffentlichen Schlüssels. Die Funktion des vom Absender mit Zertifikat bereitgestellten öffentlichen Schlüssels übernimmt das User-Sender-Secret, welches aus dem zur übergebenen User-ID gespeicherten User-Master-Secret und der Sender-ID berechnet wird.

Für die Entschlüsselung der symmetrisch verschlüsselten Nachricht wird die Sender-ID als Meta-Datum mit der verschlüsselten Nachricht vom System des Absenders an das Systems des Empfängers mitgeliefert wird, wo das User-Sender-Secret aus dem User-Master-Secret und der Sender-ID abgeleitet wird. Anschließend wird die Nachricht selbst mit dem User-Sender-Secret entschlüsselt, um in Klarschrift in dem Browser des Empfängers angezeigt zu werden. Die kryptografische Ableitung erfolgt dabei analog der Bereitstellung des User-Sender-Secrets im TrustCenter. Da somit das User-Sender-Secret erst im Machtbereich des Empfängers wiederhergestellt wird, liegt es dem elektronischen Postdienst niemals in entschlüsselter Form vor. Das Verfahren erfüllt damit ebenfalls die Voraussetzungen für die Nachrichtenversendung für Berufsgeheimnisträger.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
Fig. 1 ein Ablaufdiagramm für die Schüsselsicherung
Fig. 2 ein Ablaufdiagramm für die Änderung des Passwortes
Fig. 3 ein Ablaufdiagramm für ein Key-Recovery-Verfahren
Fig. 4 ein Ablaufdiagramm für die Anzeige eines verschlüsselten Anhangs in Klarschrift, wenn nur der Anhang der Nachricht verschlüsselt ist
Fig. 5 ein Ablaufdiagramm für die Anzeige einer verschlüsselten Nachricht in Klarschrift, wenn die gesamte Nachricht verschlüsselt ist
Fig. 6 ein Ablaufdiagramm für das zur Verfügung stellen eines User-Sender-Secrets

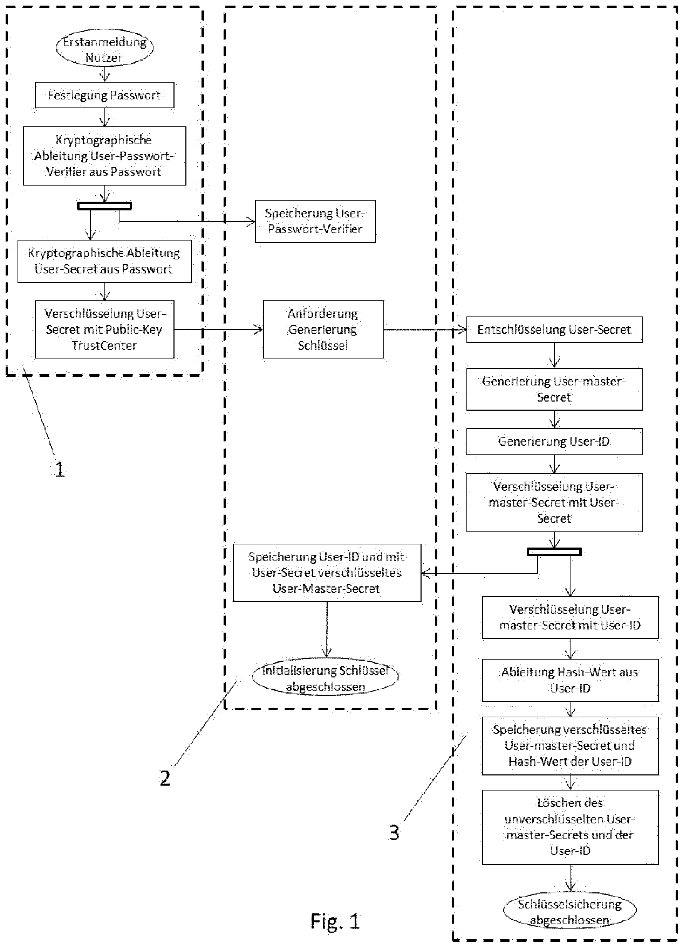

Wie in **Fig. 1** dargestellt, wird die Schlüsselverwaltung an eine aus Sicht des elektronischen Postdiensts 2 dritte Partei, einem TrustCenter 3 ausgelagert. Damit wird gewährleistet, dass eine Trennung zwischen Schlüsselverwaltung und Datenspeicherung erfolgt und keine Partei eigenständig Zugriff auf Schlüssel und Daten erhält.

Der Nutzer des elektronischen Postdienstes verfügt über ein System 1 mit einem Computer, einem darauf lauffähigen Browser und einem Internetanschluss.

Der Nutzer besitzt einen eindeutigen User-Namen, mit dem er sich bei dem elektronischen Postdienst anmeldet. Dieser Nutzername wird bei der erstmaligen Registrierung für den elektronischen Postdienst vergeben.

Bei der Erstanmeldung legt der Nutzer unter Nutzung seines Systems 1 ein Passwort fest. Aus diesem Passwort wird mittels einer kryptografische Ableitung ein User-Passwort-Verifier generiert. Dieser User-Passwort-Verifier stellt ein Datum zur Authentisierung des Nutzers des elektronischen Postdienstes 2 dar. Der User-Passwort-Verifier wird an den elektronischen Postdienst 2 übertragen und dort in einer Datenbank gespeichert. Aus dem Passwort wird durch kryptografische Ableitung ein User-Secret generiert. Dabei stellt das User-Secret den symmetrischen Schlüssel zur Verschlüsselung des benutzereigenen User-Master-Secrets dar. Das User-Secret wird mit dem Public Key des TrustCenters 3 verschlüsselt und das verschlüsselte User-Secret an den elektronischen Postdienst 2 übertragen, wovon es weiter an das TrustCenter 3 übertragen wird, wobei der elektronische Postdienst 2 einen Funktionsaufruf zur Generierung eines User-Master-Secrets an das TrustCenter 3 sendet. Als TrustCenter 3 kann jede dritte vertrauenswürdige Partei fungieren, die entsprechende Dienstleistungen anbietet. Zweckmäßigerweise findet sich im Konzernverbund der Anmelderin mit Signtrust ein entsprechendes TrustCenter 3. Durch Nutzung von Signtrust als TrustCenter 3 und dem von der Anmelderin angebotenen E-Postbrief als elektronischen Postdienst 2 wird der organisatorische Ablauf vereinfacht, da der elektronische Postdienst 2 das TrustCenter 3 nutzt und daher üblicherweise eine entsprechende vertragliche Vereinbarung mit dem TrustCenter 3 eingehen muss. Im TrustCenter 3 wird das User-Secret entschlüsselt und ein User-Master-Secret generiert. Weiterhin wird im TrustCenter 3 eine User-ID generiert, wobei die User-ID ein eindeutiges Identitätsdatum darstellt, das zur Zuordnung des entsprechenden User-Master-Secrets zwischen dem elektronischen Postdienst 2 und dem TrustCenter 3 verwendet wird. Das TrustCenter 3 kennt ausschließlich die User-ID, nicht aber die Zuordnung auf den beim elektronischen Postdienst 2 damit assoziierten User-Namen. Nun wird im TrustCenter 3 das User-Master-Secret mit dem User-Secret verschlüsselt und die User-ID und das mit dem User-Secret verschlüsselte User-Master-Secret vom TrustCenter 3 an den elektronischen Postdienst 2 übertragen, wo die User-ID und das mit dem User-Secret verschlüsselte User-Master-Secret gespeichert wird.

Der Absender verfügt ebenfalls über ein System 4 mit einem Computer und einem Internetanschluss. Der Absender verschlüsselt das schützenswerte Dokument vor Versand über den elektronischen Postdienst 2 innerhalb seines Systems 4 und damit noch innerhalb seines Machtbereiches. Dabei ist der Absender als Berufsgeheimnisträger üblicherweise ein Geschäftskunde des elektronischen Postdienstes 2. Dem Empfänger wird das verschlüsselte Dokument beim Lesen der Nachricht noch in verschlüsselter Form auf seinen System 1 und somit in seinen Machtbereich übertragen und erst dort entschlüsselt. Dabei kann der elektronische Postdienst 2 als Transportmedium der Nachrichten auf die eingesetzten privaten Schlüssel nicht zugreifen und die geschützten Anhänge daher nicht lesen. Dadurch wird gewährleistet, dass Berufsgeheimnisträger ihre Berufsgeheimnisse nicht gegenüber Dritten, auch nicht gegenüber dem elektronischen Postdienst 2 offenlegen.

Das im System des Nutzers 1 aus dem User-Passwort berechnete User-Secret wird im Rahmen der Benutzerinitialisierung, beispielsweise bei der Registrierung vom System des Nutzers 1 mit dem Public-Key des TrustCenters 3 verschlüsselt. Das verschlüsselte User-Secret wird an den elektronischen Postdienst 2 zur Weiterleitung an das TrustCenter 3 übertragen. Der elektronische Postdienst 2 implementiert einen Funktionsaufruf an das TrustCenter 3, damit das TrustCenter 3 ein neues User-Master-Secret generiert. Der Funktionsaufruf beinhaltet lediglich das mit dem Public-Key des TrustCenters 3 verschlüsselte User-Secret. Das TrustCenter 3 entschlüsselt das User-Secret und verschlüsselt symmetrisch damit das neu generierte User-Master-Secret, welches unter Angabe einer von dem TrustCenter 3 generierten User-ID und des zugehörigen Zertifikates an den elektronischen Postdienst 2 zurückgegeben wird. Der elektronische Postdienst 2 speichert diese Werte in der Benutzerdatenbank als Attribut unter dem zu registrierenden Benutzerkonto.

Dieses Verfahren gewährleistet, dass der elektronische Postdienst 2 keine Kenntnis des User-Master-Secrets erlangen kann und lediglich als Verwalter im Sinne von Speicherung des verschlüsselten User-Master-Secrets und des nicht geheimen Zertifikates auftritt.

Nach der Verschlüsselung des User-Master-Secrets mit dem User-Secret im TrustCenter 3 wird das User-Master-Secret mit der User-ID im TrustCenter 3 verschlüsselt und anschließend ein Hash-Wert aus der User-ID im TrustCenter 3 abgeleitet; woraufhin das verschlüsselte User-Master-Secret und der aus der User-ID abgeleitete Hash-Wert im TrustCenter 3 gespeichert wird. Anschließend werden das unverschlüsselte Unser-Master-Secret und die User-ID im TrustCenter 3 gelöscht.

Der elektronische Postdienst 2 ist über ein Portal im Internet erreichbar. Das Portal stellt eine Login-Maske bereit, in die der User-Name und ein User-Passwort eingebbar sind.

Die Übertragung des User-Namens und des User-Passwort-Verifiers von dem System 1 des Nutzers an den elektronischen Postdienst 2 wird über das SRP-Verfahren als challenge-response basiertes Verfahren durchgeführt. Das Verfahren gewährleistet, dass der elektronische Postdienst 2 das User-Passwort nicht mehr in Erfahrung bringen kann, da es im Rahmen der Initialisierung, das heißt der Registrierung und Authentisierung, dem Login, nicht an den elektronischen Postdienst 2 übertragen wird. Es werden ausschließlich kryptographische Ableitungen des User-Passworts vom System 1 des Nutzers übertragen. Somit stellt das User-Passwort ein Geheimnis dar, welches ausschließlich dem Portalbenutzer bekannt ist.

Das User-Secret wird zum Verarbeitungszeitpunkt im System 1 des Nutzers aus dem User-Passwort berechnet, so dass keine gesonderte Initialisierung erforderlich ist. Das im System 1 aus dem User-Passwort berechnete User-Secret wird im Rahmen der Benutzerinitialisierung, beispielsweise bei der Registrierung vom System 1 mit dem Public-Key des TrustCenters 3, beispielsweise dem Signtrust-Public-Key, verschlüsselt. Das verschlüsselte User-Secret wird an den E-Postbrief 2 zur Weiterleitung an Signtrust 3 übertragen. Das E-Postbrief-System 2 implementiert einen Funktionsaufruf an Signtrust 3, damit Signtrust 3 ein neues User-Master-Secret generiert. Der Funktionsaufruf beinhaltet lediglich das mit dem Signtrust-Public-Key verschlüsselte User-Secret. Signtrust 3 entschlüsselt das User-Secret und verschlüsselt symmetrisch damit das neu generierte User-Master-Secret, welches unter Angabe einer von Signtrust 3 generierten User-ID und des zugehörigen Zertifikates an das E-Postbrief-System 2 zurück gegeben wird. Das E-Postbrief-System 2 speichert diese Werte in der Benutzerdatenbank als Attribut unter dem zu registrierenden Benutzerkonto.

Dieses Verfahren gewährleistet, dass das E-Postbrief-System 2 keine Kenntnis des User-Master-Secrets erlangen kann und lediglich als Verwalter im Sinne von Speicherung des verschlüsselten User-Master-Secrets und des nicht geheimen Zertifikates auftritt.

Um ein Key-Recovery zu ermöglichen, werden die generierten Daten von Signtrust 3 nicht verworfen, sondern gesichert gespeichert. Signtrust 3 selbst hat hierbei keinerlei Informationen zum Personenbezug der generierten Daten. Das neu generierte User-Master-Secret wird mit der User-ID verschlüsselt und das Ergebnis unter Angabe eines Hash-Wertes der User-ID in einer Datenbank gespeichert.

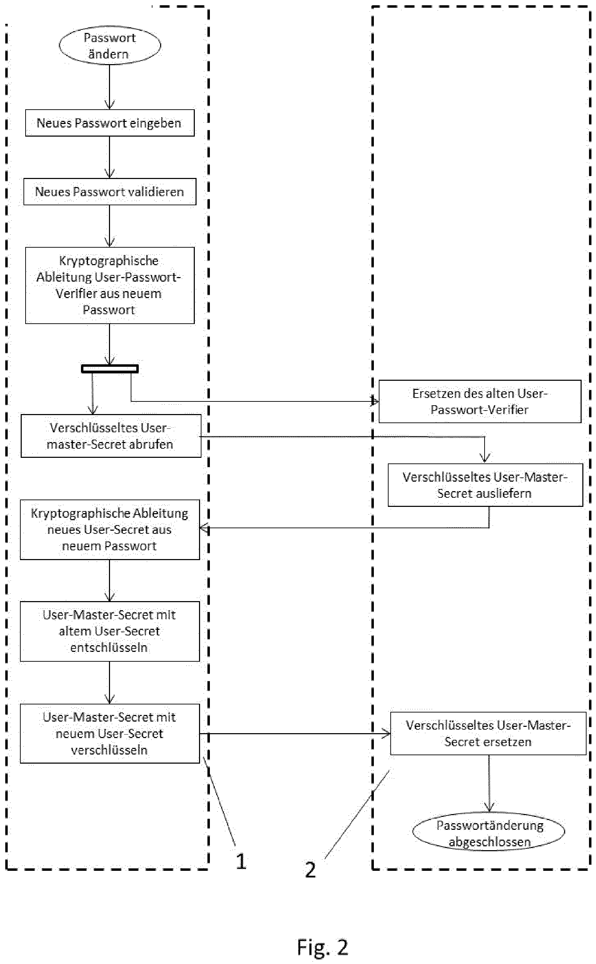

Passwortänderungen durch den Nutzer sind gemäß einem Verfahren wie im Ablaufdiagramm der **Fig. 2** dargestellt, möglich:
Passwortänderungen sind ausschließlich im eingeloggten Zustand möglich, in dem das System 1 des Nutzers das User-Master-Secret bereits im Zugriff hat. Eine Passwortänderung führt zu einem anderen User-Secret, da es sich direkt aus dem User-Passwort ableitet. Bei einer Passwortänderung wird das User-Master-Secret mit dem neuen User-Secret im System 1 des Nutzers verschlüsselt und zur Speicherung in der E-Postbrief-Benutzerdatenbank an das E-Postbrief-System 2 übertragen. Eine Interaktion mit dem TrustCenter 3 ist nicht notwendig.

Der Nutzer gibt zunächst das neue Passwort unter Nutzung seines Systems 1 ein und validiert es. Anschließend wird im System 1 des Nutzers ein User-Passwort-Verifier aus dem neuen Passwort kryptographisch abgeleitet, woraufhin es an das E-Postbrief-System 2 übertragen und in einer Datenbank des E-Postbrief- Systems gespeichert wird, wobei der alte User-Passwort-Verifier ersetzt wird. Anschließend wird das verschlüsselte User-Master-Secret von dem elektronischen Postdienst 2 abgerufen und von dem elektronischen Postdienst 2 in das System 1 des Nutzers übertragen. Nun wird ein neues User-Secret aus dem neuen Passwort kryptografisch abgeleitet, woraufhin das User-Master-Secret mit dem alten User-Secret entschlüsselt wird und anschließend mit dem neuen User-Secret wieder verschlüsselt wird. Das neu verschlüsselte User-Master-Secret wird nun zu dem E-Postbrief-System 2 übertragen, wo es in einer Datenbank gespeichert wird, wobei das alte User-Master-Secret ersetzt wird.

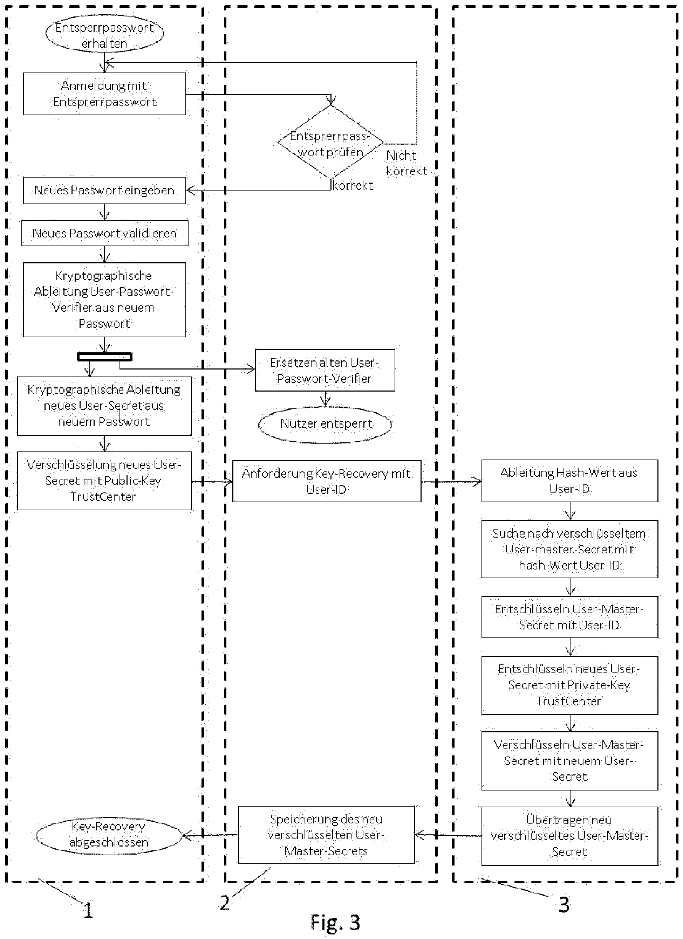

In **Fig. 3** ist das Verfahren für die Passwortrücksetzung oder Key-Recovery beschrieben. Ist einem Nutzer des E-Postbrief-Systems 2 das aktuelle User-Passwort nicht mehr bekannt, beispielsweise weil er es vergessen hat, oder ist die Authentisierung des Nutzers des E-Postbrief-Systems 2 mittels dieses Passwortes beispielsweise nach dreimaliger Falscheingabe gesperrt, so kann sich der Nutzer nicht mehr mit diesem Passwort anmelden. Da ohne dieses Passwort das davon abgeleitete User-Secret nicht berechnet werden kann, ist das in der Benutzerdatenbank des E-Postbrief-Systems 2 hinterlegte verschlüsselte User-Master-Secret des Benutzers somit nicht mehr entschlüsselbar. In diesem Falle muss ein Key-Recovery-Verfahren eingeleitet werden, da ansonsten der Nutzer nicht mehr auf bereits empfangene verschlüsselte Nachrichteninhalte zugreifen könnte.

Um ein Key-Recovery zu ermöglichen, werden die generierten Daten von Signtrust 3 nicht verworfen, sondern gesichert gespeichert. Signtrust 3 selbst hat hierbei keinerlei Informationen zum Personenbezug der generierten Daten. Das neu generierte User-Master-Secret wird mit der User-ID verschlüsselt und das Ergebnis unter Angabe eines Hash-Wertes der User-ID in einer Datenbank gespeichert. Die Passwortrücksetzung ist dabei nach einem Verfahren gemäß der folgenden Ausführungsform möglich: Der Nutzer fordert ein Entsperrpasswort mit Hilfe seines Systems 1 bei dem E-Postbrief-System 2 an. Das E-Postbrief-System 2 generiert kryptographisch ein Entsperrpasswort und stellt es dem Nutzer auf postalischem Weg zu. Nach Erhalt dieses Entsperrpasswortes kann sich Nutzer wieder am Portal des E-Postbrief-Systems 2 anmelden. Dabei wird das Entsperrpasswort an das E-Postbrief-System 2 übermittelt. Falls das Entsperrpasswort korrekt eingegeben wurde, erfolgt eine Rückmeldung des E-Postbrief-Systems 2 an das System 1 des Nutzers, dass das Entsperrpasswort korrekt ist, und es wird eine Aufforderung zur Eingabe eines neuen Passwortes im Browser des Nutzers angezeigt. Andernfalls erfolgt eine Rückmeldung des E-Postbrief-Systems 2 an den Browser des Nutzers, dass das Entsperrpasswort nicht korrekt ist, und der Nutzer wird nochmals zur korrekten Eingabe des Entsperrpassworts aufgefordert, wobei ein Abbruch des Verfahrens nach dreimaliger Falscheingabe erfolgt. War die Eingabe des Entsperrpassworts erfolgreich, kann der Nutzer unter Nutzung seines Browsers ein neues Passwort eingeben und validieren. Anschließend erfolgen die kryptographische Ableitung eines neuen User-Passwort-Verifiers aus dem neuen Passwort und die Übertragung des User-Passwort-Verifiers an das E-Postbrief-System, wo der neue User-Passwort-Verifier unter Ersetzung des alten User-Passwort-Verifiers in einer Datenbank gespeichert wird. Nun wird ein neues User-Secret aus dem neuen Passwort im System 1 des Nutzers kryptographisch abgeleitet und mit dem Public-Key des TrustCenters 3 verschlüsselt und an das E-Postbrief-System 2 übertragen. Daraufhin wird eine Aufforderung zur Key-Recovery mit der User-ID des Nutzers vom E-Postbrief-System 2 an Signtrust 3 übertragen, wo aus der User-ID ein Hash-Wert abgeleitet wird. Anschließend wird in Signtrust 3 das verschlüsselte User-Master-Secret mit dem Hash-Wert der User-ID gesucht und nach dem Auffinden mit der User-ID entschlüsselt. Das neue User-Secret wird mit dem Private Key von Signtrust 3 in Signtrust 3 entschlüsselt und das User-Master-Secret mit dem neuen User-Secret in Signtrust 3 verschlüsselt. Daraufhin wird das neue verschlüsselte User-Master-Secret von Signtrust 3 an das E-Postbrief-System 2 übermittelt, wo es das alte verschlüsselte User-Master-Secret ersetzt. Zum Schluss wird das neue verschlüsselte User-Master-Secret vom E-Postbrief-System 2 an das System 1 des Nutzers übertragen.

Im E-Postbrief-System 2 können Empfängerstammdaten gespeichert sein, wobei der öffentliche Schlüssel in Signtrust 3 mit einem Zertifikat versehen wird und dieses Zertifikat zusammen mit dem verschlüsselten User-Master-Secret von Signtrust 3 an das E-Postbrief-System 2 weitergeleitet wird, wo es unter den Empfängerstammdaten abgelegt wird.

Ein abgesichertes Key-Recovery-Verfahren dient dazu, Zugriff auf verschlüsselte Daten durch den Benutzer auch im Falle eines Passwortverlustes oder einer Passwortänderung zu gewährleisten. Im Falle eines Passwortverlustes durch den Benutzer wird diesem postalisch ein Entsperrpasswort zugesandt. Nach erfolgter Eingabe diese Entsperrpasswortes muss der Nutzer ein neues Passwort eingeben. Ein neues benutzerspezifisches Geheimnis, das neue User-Secret, wird aus diesem Passwort abgeleitet und analog der initialen Provisionierung verschlüsselt an das TrustCenter 3 übertragen. Da dieses den privaten Schlüssel weiterhin gespeichert hat, kann dieser mit dem neuen benutzerspezifischen Geheimnis, dem neuen User-Secret, verschlüsselt werden und überschreibt den bisherigen Datensatz in den Kundendaten des E-Postbrief-Systems 2. Bei einer reinen Passwortänderung findet die Umschlüsselung des privaten Schlüssels, also des User-Master-Secrets, innerhalb des Systems 1 des Nutzers statt und der verschlüsselte Datensatz in den Kundendaten des E-Postbrief-Systems 2 wird mit dem neuen Wert überschrieben. Eine Beteiligung des TrustCenters 3 ist hierbei nicht notwendig.

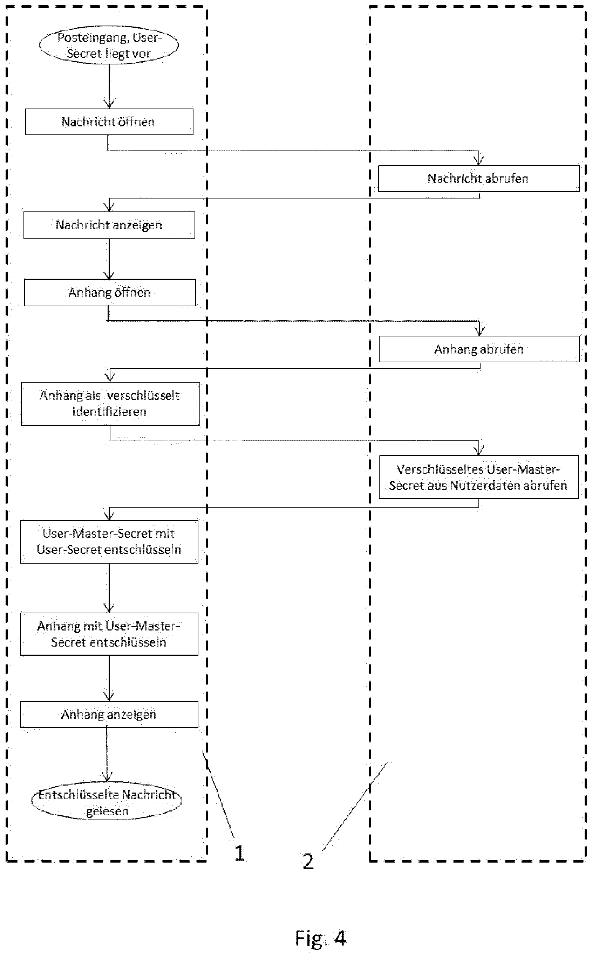

Der Schutz von Berufsgeheimnissen kann sich auf Informationen beziehen, die in zu schützenden E-Postbrief-Anhängen verschickt werden; Nachrichteninhalte ("Body") weisen üblicherweise ein standardisiertes Anschreiben an den Empfänger auf. Die zu schützenden Berufsgeheimnisse werden in Form von verschlüsselten Dateien an E-Postbriefe angehängt. Diese können beispielsweise als PDF-Dokumente vorliegen, grundsätzlich kann aber auch jedes andere Dateiformat verwendet werden. Verschlüsselte Anhänge innerhalb einer mittels sicherer Übertragung übertragenen digitalen Nachricht können gemäß dem in **Fig. 4** gezeigten Verfahren angezeigt werden, indem die Nachricht in dem Browser des Nutzers angezeigt wird, wobei dem Nutzer angezeigt wird, dass die Nachricht einen Anhang enthält. Der Nutzer ruft den Anhang vom E-Postbrief-System 2 ab, woraufhin der verschlüsselte Anhang vom E-Postbrief-System 2 auf das System 1 des Nutzers übertragen wird. Dort wird durch den Browser des Nutzers die Verschlüsselung erkannt und das verschlüsselte User-Master-Secret aus der Datenbank des E-Postbrief-Systems 2 angefordert. Nach der Übertragung des verschlüsselten User-Master-Secrets aus der Datenbank des E-Postbrief-Systems 2 auf das System 1 des Nutzers wird das User-Master-Secret mit dem User-Secret innerhalb des Browsers des Nutzers entschlüsselt, anschließend der Anhang mit dem User-Master-Secret innerhalb des Browsers des Nutzers entschlüsselt und der Anhang in Klarschrift innerhalb des Browsers des Nutzers angezeigt, so dass die entschlüsselte Nachricht gelesen werden kann.

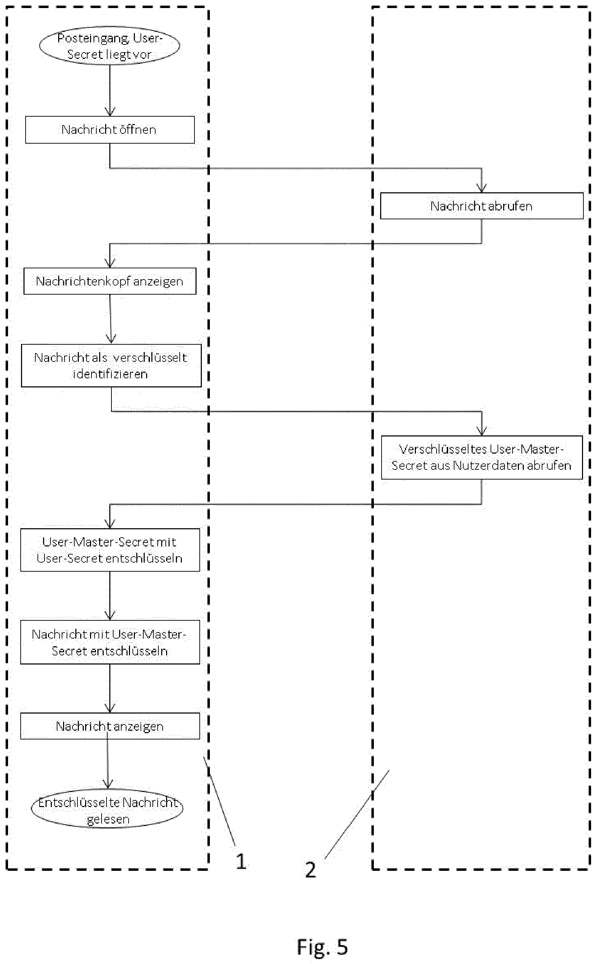

Alternativ kann aber auch der gesamte Nachrichtentext verschlüsselt sein. Die Entschlüsselung einer solchen Nachricht ist in **Fig. 5** beschreiben. In dem Browser des Nutzers wird zunächst nur der unverschlüsselte Nachrichtenkopf angezeigt. Die Nachricht selbst wird als verschlüsselt identifiziert, woraufhin das verschlüsselte User-Master-Secret aus den Nutzerdaten von dem E-Postbrief-System 2 abgerufen wird. Im Browser des Nutzers wird das User-Master-Secret mit dem User-Secret entschlüsselt und danach die Nachricht selbst mit dem User-Master-Secret entschlüsselt und in Klarschrift angezeigt.

Somit stellt der E-Postbrief das Transportmedium der Nachrichten dar, wobei das E-Postbrief-System 2 auf die eingesetzten Empfängerschlüssel nicht zugreifen und die geschützten Anhänge daher nicht lesen kann. Dadurch wird gewährleistet, dass Berufsgeheimnisträger ihre Berufsgeheimnisse nicht gegenüber Dritten, auch nicht gegenüber dem E-Postbrief-System 2 offenlegen. Die Generierung der erforderlichen Schlüssel erfolgt durch ein TrustCenter 3, beispielsweise Signtrust, als unabhängige dritte Partei. Hierbei werden keine personenbezogenen Daten an das TrustCenter 3 übertragen. Die Zuordnung zum Benutzer erfolgt lediglich über eine für das TrustCenter 3 anonyme ID, der User-ID. Der private Schlüssel des Nutzers, das User-Master-Secret, wird vor der Auslieferung durch das TrustCenter 3 mit einem benutzerspezifischen Geheimnis, dem User-Secret, verschlüsselt. Das benutzerspezifische Geheimnis selbst wird ausschließlich verschlüsselt an das TrustCenter 3 übertragen, wobei die Verschlüsselung mit einem öffentlichen Schlüssel des TrustCenter 3, beispielsweise dem Signtrust-Public-Key, erfolgt. Der verschlüsselte private Schlüssel, das User-Master-Secret, wird im E-Postbrief-System 2 unter den Kundendaten verwaltet. Das benutzerspezifische Geheimnis wird auf Basis des Login-Passwortes des jeweiligen Portalbenutzers innerhalb des Systems 1 des Nutzers abgeleitet. Ohne Kenntnis des Login-Passwortes ist somit keine Rekonstruktion des Geheimnisses möglich und der gespeicherte verschlüsselte private Schlüssel daher gegen unautorisierten Zugriff geschützt. Zur Authentisierung des Empfängers am E-Postbrief-System 2 wird ein "Zero Knowledge Password Proof" Protokoll verwendet, also lediglich eine nicht-rekonstruierbare kryptographische Ableitung des Schlüssels an das E-Postbrief-System übertragen. Daher kann das E-Postbrief-System 2 das User-Secret nicht berechnen.

Die Nachricht beziehungsweise der Anhang kann mit einem asymmetrischen Verfahren oder einem symmetrischen Verfahren verschlüsselt sein, wobei die Verwendung eines asymmetrischen Verfahrens üblicherweise höhere Anforderungen an die Leistungsfähigkeit der verwendeten Computer stellen. Das E-Postbrief-System 2 stellt seinen Geschäftskunden einen Dienst, die Anschriftenqualifizierung ANQS, bereit. Hierbei übergibt der Geschäftskunde eine Liste postalischer Anschriften an das E-Postbrief-System 2, welches in seinen Kundenstammdaten nach Übereinstimmungen mit den vorhandenen postalischen Anschriften seiner Kunden sucht. Für die Anwendung eines asymmetrischen Verschlüsselungsverfahren wird eine Anschrift als die eines E-Postbrief-Kunden zusammen mit der digitalen E-Postbriefadresse des Kunden und des ihm zugeordneten Zertifikates, an den Geschäftskunden zurückgeliefert, wenn eine Anschrift als die eines E-Postbrief-Kunden identifiziert wird. Dem Geschäftskunden liegt somit die digitale Anschrift und der für die Verschlüsselung notwendige Schlüssel in Form des Zertifikates vor. Er kann dieses Zertifikat auf seinen Verwendungszweck und seine Gültigkeit hin validieren. Der Geschäftskunde verschlüsselt alle zu schützenden Anhänge eines E-Postbriefes mit dem jeweiligen Schlüssel des Empfängers. Der Geschäftskunde kann die Ergebnismenge an Sendungen, für die auf Basis der postalischen Adresse ein Schlüssel ermittelt wurde, als digitale E-Postbriefe einliefern. Der Geschäftskunde überträgt die Nachrichten mit den verschlüsselten Anhängen an das E-Postbrief-System 2, von dem aus die Zustellung der Nachrichten an die angegebenen Empfänger erfolgt. Der Geschäftskunde erhält Bestätigungen, dass die Nachrichten als digitale E-Postbriefe in das jeweilige Empfängerpostfach zugestellt wurden. Bei Nicht-Zustellbarkeit einer Nachricht werden dem Absender Benachrichtigungen mit dem Grund der Nicht-Zustellbarkeit, wie beispielsweise Konto gelöscht, Postfach voll, etc., übermittelt. Alle E-Postbriefe, unabhängig von der Art der Einlieferung und ihren Inhalten, werden innerhalb des E-Postbrief-Systems 2 dem Empfängerpostfach zugeordnet und zugriffsgeschützt in einer Datenbank abgelegt. Zum Abruf der Nachrichten muss sich der Benutzer am E-Postbrief-System 2 anmelden und seinen Posteingang aufrufen. Im Rahmen des Login-Vorganges des Benutzers wird dessen User-Secret aus dem User-Passwort innerhalb seines Browsers berechnet. Ein verschlüsselter Anhang wird an den Browser übertragen, so dass der Browser eine Repräsentation der Datei im Arbeitsspeicher vorhält. Das verschlüsselte User-Master-Secret wird aus den Kundenstammdaten abgerufen und ebenfalls im Arbeitsspeicher gehalten. Das verschlüsselte User-Master-Secret wird im Arbeitsspeicher des Browsers mit dem während des Login-Vorgangs berechneten User-Secret entschlüsselt. Die verschlüsselte Datei wird mit dem nun vorliegenden User-Master-Secret entschlüsselt und dem Kunden angezeigt. Für jeden Empfänger wird ein eigenes asymmetrisches Schlüsselpaar generiert und der öffentliche Schlüssel in einem Zertifikat dem Absender bereitgestellt.

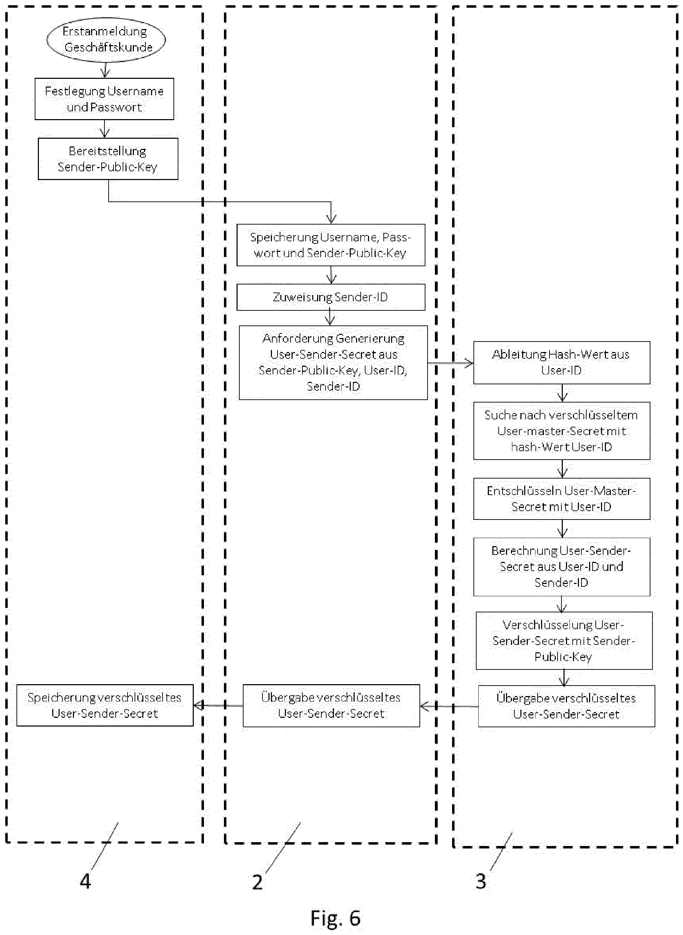

Soll ein symmetrisches Verschlüsselungsverfahren verwendet werden, so existiert kein nicht-schützenswertes Gegenstück im Sinne eines öffentlichen Schlüssels. Die Funktion des vom Absender mit Zertifikat bereitgestellten öffentlichen Schlüssels übernimmt das User-Sender-Secret, welches aus dem zur übergebenen User-ID gespeicherten User-Master-Secret und der Sender-ID berechnet wird. Die zur Verfügung Stellung dieses User-Sender-Secrets ist in **Fig. 6** gezeigt. Bei der Erstanmeldung eines Geschäftskunden als Absender schützenswerter Nachrichten legt dieser zunächst einen Usernamen und ein Passwort fest. Weiterhin stellt er einen Sender-Public-Key bereit. Diese Daten werden von dem System des Absenders 4 an das E-Postbrief-System 2 übertragen, wo sie beispielsweise in einer Datenbank gespeichert werden. Das E-Postbrief-System 2 weist dem neuen Geschäftskunden eine Sender-ID zu und fordert die Generierung eines User-Sender-Secrets aus dem Sender-Public-Key, der User-ID und der Sender-ID beim TrustCenter 3 an. Im TrustCenter 3 wird das User-Sender-Secret aus dem User-Master-Secret und der Sender-ID berechnet und mit dem Sender-Public-Key verschlüsselt. Dieses verschlüsselte User-Sender-Secret wird anschließend über den elektronischen Postdienst 2 an das System 4 Geschäftskunden weitergeleitet. Das User-Sender-Secret wird als gemeinsames Geheimnis zwischen dem Absender, das heißt dem E-Postbrief-Geschäftskunden, und dem Empfänger, das heißt dem E-Postbrief-Portalbenutzer, etabliert. Der Absender verwendet seinen Sender-Private-Key, um das User-Sender-Secret zu entschlüsseln. Das E-Postbrief-System 2 hat damit während des gesamten Übertragungsvorganges keinen Zugriff auf den absender- und empfängerspezifischen symmetrischen Schlüssel.

E-Postbrief-Geschäftskunden können über einen Service des elektronischen Postdienstes, beispielsweise die Anschriftenqualifizierung ANQS der Anmelderin, das entsprechende User-Sender-Secret erfragen. Die Sender-ID wird hierbei als anbindungsspezifisches Merkmal vom E-Postbrief-System 2 automatisch mit übergeben. Der E-Postbrief-Geschäftskunde kann das enthaltene User-Sender-Secret mittels der von Signtrust 3 beigefügten digitalen Signatur prüfen und somit die Authentizität des bereitgestellten Schlüssels validieren. Mit dem User-Sender-Secret kann der E-Postbrief-Geschäftskunde somit Informationen symmetrisch verschlüsseln und versenden.

Für den Empfänger muss vor der Entschlüsselung der symmetrisch verschlüsselten Nachricht das User-Sender-Secret aus dem User-Master-Secret und der mit der Nachricht als Meta-Datum mitgelieferten Sender-ID abgeleitet werden. Die kryptografische Ableitung erfolgt dabei analog der Bereitstellung des User-Sender-Secrets im TrustCenter. Da somit das User-Sender-Secret erst im Machtbereich des Empfängers wiederhergestellt wird, liegt dieses dem elektronischen Postdienst niemals in entschlüsselter Form vor. Das Verfahren erfüllt damit ebenfalls die Voraussetzungen für die Nachrichtenversendung für Berufsgeheimnisträger.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### Bezugszeichenliste:

- 1: Browser des Nutzers
- 2: Elektronischer Postdienst, E-Postbrief-System
- 3: TrustCenter, Signtrust
- 4: System des Absenders

## Patentansprüche

1. Verfahren für die sichere Übertragung einer digitalen Nachricht mittels eines elektronischen Postdienstes (2), wobei ein Nutzer des Dienstes über ein System (1) mit einen Computer mit einem darauf lauffähigen Browser und einem Internetanschluss verfügt und der elektronische Postdienst (2) ein TrustCenter (3) nutzt, wobei auf dem TrustCenter (3) ein asymmetrisches Verschlüsselungsverfahren installiert ist,
Mit den folgenden Schritten:
Festlegung eines Passworts durch den Nutzer unter Nutzung des Systems (1) des Nutzers;
Kryptografische Ableitung eines User-Passwort-Verifiers aus dem Passwort;
Übertragung des User-Passwort-Verifiers an den elektronischen Postdienst (2) und Speicherung des User-Passwort-Verifiers auf einem Speichermediums des elektronischen Postdienstes (2), wobei das Verfahren durch die folgenden Schritte charakterisiert wird:
Kryptografische Ableitung eines User-Secrets aus dem Passwort; Verschlüsselung des User-Secrets mit dem Public Key des TrustCenters (3); Übertragung des verschlüsselten User-Secrets an den elektronischen Postdienst (2);
Übertragung des verschlüsselten User-Secrets von dem elektronischen Postdienst (2) an das TrustCenter (3), wobei der elektronische Postdienst (2) einen Funktionsaufruf zur Generierung eines User-Master-Secrets an das TrustCenter (3) sendet;
Entschlüsselung des User-Secrets im TrustCenter (3);
Generierung des User-Master-Secrets im TrustCenter (3);
Generierung einer User-ID im TrustCenter (3);
Verschlüsselung des User-Master-Secrets mit dem User-Secret im TrustCenter (3);
Übertragung der User-ID und des mit dem User-Secret verschlüsselten User-Master-Secrets vom TrustCenter (3) an den elektronischen Postdienst (2); Speicherung der User-ID und des mit dem User-Secret verschlüsselten User-Master-Secrets in dem elektronischen Postdienst (2).

2. Verfahren für die sichere Übertragung einer digitalen Nachricht mittels eines elektronischen Postdienstes (2) nach Anspruch 1,
**dadurch gekennzeichnet,**
**dass**
nach der Verschlüsselung des User-Master-Secrets mit dem User-Secret im TrustCenter (3) das User-Master-Secret mit der User-ID im TrustCenter (3) verschlüsselt wird; anschließend
ein Hash-Wert aus der User-ID im TrustCenter (3) abgeleitet wird; anschließend das verschlüsselte User-Master-Secret und der aus der User-ID abgeleitete Hash-Wert im TrustCenter (3) gespeichert wird; und danach das unverschlüsselte Unser-Master-Secret und die User-ID im TrustCenter (3) gelöscht werden.

3. Verfahren nach einem der vorherigen Ansprüche,
**dadurch gekennzeichnet,**
**dass** der elektronischen Postdienst (2) über ein Portal im Internet erreichbar ist, wobei das Portal eine Login-Maske bereitstellt, in die der User-Name und ein User-Passwort eingebbar ist.

4. Verfahren nach einem der vorherigen Ansprüche,
**dadurch gekennzeichnet,**
**dass** die Übertragung des User-Namens und des User-Passwort-Verifiers von dem System (1) des Nutzers an den elektronischen Postdienst (2) über ein Challenge-Response basiertes Verfahren durchgeführt wird.

5. Verfahren nach Anspruch 4,
**dadurch gekennzeichnet,**
**dass** die Übertragung des User-Namens und des User-Passwort-Verifiers von dem System (1) des Nutzers an den elektronischen Postdienst (2) über das SRP-Verfahren durchgeführt wird.

6. Verfahren für die Passwortänderung für die sichere Übertragung einer digitalen Nachricht mittels eines elektronischen Postdienstes (2) nach einem der vorherigen Ansprüche,
**gekennzeichnet durch die Schritte**
Eingabe des neuen Passworts **durch** den User unter Nutzung des Systems (1) des Nutzers;
Validieren des neuen Passworts **durch** den User unter Nutzung des Systems (1) des Nutzers;
Kryptographische Ableitung des User-Passwort-Verifiers aus dem neuen Passwort;
Übertragung des User-Passwort-Verifiers an den elektronischen Postdienst (2) und Speicherung des User-Passwort-Verifiers auf einem Speichermedium des elektronischen Postdienstes (2), dabei Ersetzen des alten User-Passwort-Verifiers;
Abrufen des verschlüsselten User-Master-Secrets von dem elektronischen Postdienst (2);
Übertragen des verschlüsselten User-Master-Secrets von dem elektronischen Postdienst (2) in das System (1) des Nutzers;
Kryptografische Ableitung eines neuen User-Secrets aus dem neuen Passwort; Entschlüsselung des User-Master-Secrets mit dem alten User-Secret; Verschlüsselung des User-Master-Secrets mit dem neuen User-Secret; Übertragung des neu verschlüsselten User-Master-Secrets zu dem elektronischen Postdienst (2);
Speicherung des neu verschlüsselten User-Master-Secrets auf einem Speichermedium des elektronischen Postdienstes (2), dabei Ersetzen des alten User-Master-Secrets.

7. Verfahren für die Passwortrücksetzung für die sichere Übertragung einer digitalen Nachricht mittels eines elektronischen Postdienstes (2) nach einem der vorherigen Ansprüche,
**gekennzeichnet durch die Schritte**
Anforderung eines Entsperrpassworts **durch** den Nutzer;
Kryptographische Generierung eines Entsperrpassworts im elektronischen Postdienst 2;
Zustellung des kryptographischen Entsperrpassworts an den Nutzer auf postalischem Weg;
Anmeldung des Nutzers am Portal des elektronischen Postdienstes (2) mit dem Entsperrpasswort;
Übertragung des Entsperrpassworts an den elektronischen Postdienst (2); Prüfung des Entsperrpassworts im elektronischen Postdienst (2);
falls das Entsperrpasswort korrekt eingegeben wurde, Rückmeldung des elektronischen Postdienstes (2) an das System (1) des Nutzers, dass das Entsperrpasswort korrekt ist, und Anzeige einer Aufforderung zur Eingabe eines neuen Passwortes, andernfalls Rückmeldung des elektronischen Postdienstes (2) an das System (1) des Nutzers, dass das Entsperrpasswort nicht korrekt ist, und Rücksprung zur Eingabeaufforderung des Entsperrpassworts, wobei nach dreimaliger Falscheingabe der Abbruch des Verfahrens erfolgt;
Eingabe des neuen Passworts **durch** den Nutzer unter Nutzung des Browsers des Nutzers;
Validieren des neuen Passworts **durch** den User unter Nutzung des Browsers des Nutzers;
Kryptographische Ableitung eines neuen User-Passwort-Verifiers aus dem neuen Passwort;
Übertragung des User-Passwort-Verifiers an den elektronischen Postdienst (2) und Speicherung des User-Passwort-Verifiers auf einem Speichermedium des elektronischen Postdienstes (2), dabei Ersetzen des alten User-Passwort-Verifiers;
Kryptographische Ableitung eines neuen User-Secrets aus dem neuen Passwort im Browser des Nutzers;
Verschlüsselung des neuen User-Secrets mit dem Public Key des TrustCenters (3);
Übertragung des verschlüsselten User-Secrets an den elektronischen Postdienst (2);
Versenden einer Aufforderung zur Key-Recovery mit der User-ID des Nutzers vom elektronischen Postdienst (2) an das TrustCenter (3);
Ableitung eines Hash-Wertes aus der User-ID im TrustCenter (3);
Suche nach dem verschlüsselten User-Master-Secret mit dem Hash-Wert der User-ID im TrustCenter (3);
Nach dem Auffinden des verschlüsselten User-Master-Secret, Entschlüsselung des User-Master-Secrets mit der User-ID im TrustCenter (3); Entschlüsselung des neuen User-Secrets mit dem Private Key des TrustCenters (3) im TrustCenter (3);
Verschlüsselung des User-Master-Secrets mit dem neuen User-Secret im TrustCenter (3);
Übertragung des neuen verschlüsselten User-Master-Secrets vom TrustCenter (3) an den elektronischen Postdienst (2);
Ersetzen des verschlüsselten User-Master-Secrets im elektronischen Postdienst (2);
Übertragung des neuen verschlüsselten User-Master-Secrets vom elektronischen Postdienst (2) an das System (1) des Nutzers.

8. Verfahren für eine Anzeige verschlüsselter Anhänge innerhalb einer mittels sicherer Übertragung übertragenen digitalen Nachricht nach einem der vorherigen Ansprüche,
**gekennzeichnet durch die Schritte, dass**
die Nachricht in dem Browser des Nutzers angezeigt wird, wobei dem Nutzer angezeigt wird, dass die Nachricht einen Anhang enthält;
Abrufen des Anhangs **durch** den Nutzer von dem elektronischen Postdienst (2); Übertragen des verschlüsselten Anhangs von dem elektronischen Postdienst (2) auf das System (1) des Nutzers;
Erkennen der Verschlüsselung **durch** den Browser des Nutzers und Anforderung des verschlüsselten User-Master-Secrets von dem Speichermedium des elektronischen Postdienstes (2);
Übertragen des verschlüsselten User-Master-Secrets von dem Speichermedium des elektronischen Postdienstes (2) auf das System (1) des Nutzers; Entschlüsselung des User-Master-Secrets mit dem User-Secret innerhalb des Browsers des Nutzers;
Entschlüsselung des Anhangs mit dem User-Master-Secret innerhalb des Browsers des Nutzers;
Anzeige des Anhangs in Klarschrift innerhalb des Browsers des Nutzers

9. Verfahren für die Anzeige einer mittels sicherer Übertragung übertragenen digitalen verschlüsselten Nachricht nach einem der Ansprüche 1 bis 8, wobei die verschlüsselte Nachricht einen unverschlüsselten Nachrichtenkopf enthält
**gekennzeichnet durch die Schritte,**
dass
der Nachrichtenkopf in dem Browser des Nutzers angezeigt wird, wobei dem Nutzer angezeigt wird, dass die Nachricht selbst verschlüsselt ist;
das verschlüsselte User-Master-Secret von dem Speichermedium des elektronischen Postdienstes (2) angefordert wird;
das verschlüsselte User-Master-Secret von dem Speichermedium des elektronischen Postdienstes (2) auf das System (1) des Nutzers übertragen wird; das verschlüsselte User-Master-Secret mit dem User-Secret im Browser des Nutzers entschlüsselt wird;
die Nachricht mit dem User-Master-Secret innerhalb des Browsers des Nutzers entschlüsselt wird; und
die Nachricht in Klarschrift innerhalb des Browsers des Nutzers angezeigt wird.

10. Verfahren für die sichere Übertragung einer digitalen Nachricht mittels eines elektronischen Postdienstes (2) gemäß einem der vorherigen Ansprüche,
**dadurch gekennzeichnet,**
**dass** ein Absender die digitale Nachricht innerhalb seines Machtbereiches verschlüsselt, einem Empfänger das verschlüsselte Dokument in verschlüsselter Form auf sein System (1) übertragen und dort entschlüsselt wird.

11. Verfahren für die sichere Übertragung einer digitalen Nachricht mittels eines elektronischen Postdienstes (2) nach Anspruch 1,
**dadurch gekennzeichnet,**
**dass** ein öffentliche Schlüssel im TrustCenter (3) mit einem Zertifikat versehen wird und dieses Zertifikat zusammen mit dem verschlüsselten User-Master-Secret vom TrustCenter (3) an den elektronischen Postdienst (2) weitergeleitet wird, wo es unter Empfängerstammdaten abgelegt wird.

12. Verfahren für die sichere Übertragung einer digitalen Nachricht mittels eines elektronischen Postdienstes (2) nach Anspruch 1,
**dadurch gekennzeichnet,**
**dass** der Absender die digitale Nachricht mit dem öffentlichen Schlüssel des Empfängers verschlüsselt.

13. Verfahren für die sichere Übertragung einer digitalen Nachricht mittels eines elektronischen Postdienstes (2) gemäß Anspruch 11, wobei der Absender einen Usernamen und ein Passwort festlegt,
**dadurch gekennzeichnet,**
**dass** der Absender einen Sender-Public-Key bereitstellt, der mit seinem Usernamen und seinem Passwort an den elektronische Postdienst (2) übertragen wird, wobei der elektronische Postdienst 2 dem Absender eine Sender-ID zuweist und den Sender-Public-Key, die User-ID und eine Sender-ID an das TrustCenter (3) übergibt, im TrustCenter (3) ein User-Sender-Secret aus dem zur übergebenen User-ID gespeicherten User-Master-Secret und der Sender-ID berechnet und anschließend mit dem Sender-Public-Key verschlüsselt wird, wobei das verschlüsselte User-Sender-Secret an den elektronischen Postdienst (2) und von dort an das System (4) des Absenders übergeben wird.

14. Verfahren für die sichere Übertragung einer digitalen Nachricht mittels eines elektronischen Postdienstes (2) nach Anspruch 1,
**dadurch gekennzeichnet,**
**dass** der Absender die digitale Nachricht mit dem User-Sender-Secret verschlüsselt.

15. Verfahren für die sichere Übertragung einer digitalen Nachricht mittels eines elektronischen Postdienstes (2) nach Anspruch 1,
**dadurch gekennzeichnet,**
**dass** die Sender-ID als Meta-Datum mit der verschlüsselten Nachricht vom System des Absenders (4) an das Systems des Empfängers (1) mitgeliefert wird, wo das User-Sender-Secret aus dem User-Master-Secret und der Sender-ID abgeleitet wird, um anschließend die Nachricht damit zu entschlüsseln.

## Claims

1. A method for securely transmitting a digital message by means of an electronic letter service (2), whereby a user of the service has a system (1) with a computer with a functioning browser running on it as well as an Internet connection, and the electronic letter service (2) makes use of a TrustCenter (3), whereby an asymmetrical encryption method is installed on the TrustCenter (3), with the following steps:
- the user creates a password, making use of the system (1) of the user;
- a user password verifier is cryptographically derived from the password;
- the user password verifier is transmitted to the electronic letter service (2) and the user password verifier is stored on a storage medium of the electronic letter service (2);
whereby the method is **characterized by** the following steps:
- a user secret is cryptographically derived from the password;
- the user secret is encrypted using the public key of the TrustCenter (3);
- the encrypted user secret is transmitted to the electronic letter service (2);
- the encrypted user secret is transmitted from the electronic letter service (2) to the TrustCenter (3), whereby the electronic letter service (2) sends to the TrustCenter (3) a function call for the generation of a user master secret;
- the user secret is decrypted in the TrustCenter (3);
- the user master secret is generated in the TrustCenter (3);
- a user ID is generated in the TrustCenter (3);
- the user master secret is encrypted with the user secret in the TrustCenter (3);
- the user ID as well as the user master secret encrypted with the user secret are transmitted from the TrustCenter (3) to the electronic letter service (2);
- the user ID and the user master secret encrypted with the user secret are stored in the electronic letter service (2).

2. The method for securely transmitting a digital message by means of an electronic letter service (2) according to claim 1,
**characterized in that**
- after the encryption of the user master secret with the user secret in the TrustCenter (3), the user master secret is encrypted with the user ID in the TrustCenter (3); subsequently,
- a hash value is derived from the user ID in the TrustCenter (3);
- after this, the encrypted user master secret and the hash value derived from the user ID are stored in the TrustCenter (3); and subsequently,
- the unencrypted user master secret and the user ID are deleted in the TrustCenter (3).

3. The method according to one of the preceding claims,
**characterized in that**
the electronic letter service (2) is accessible via a portal on the Internet, whereby the portal provides a login mask into which the user name and a user password can be entered.

4. The method according to one of the preceding claims,
**characterized in that**
the transmission of the user name and of the user password verifier from the system (1) of the user to the electronic letter service (2) is carried out by means of a challenge-response-based method.

5. The method according to claim 5,
**characterized in that**
the transmission of the user name and of the user password verifier from the system (1) of the user to the electronic letter service (2) is carried out by means of the SRP (Secure Remote Password) method.

6. The method for the password change for securely transmitting a digital message by means of an electronic letter service (2) according to one of the preceding claims,
**characterized by the following steps**
- the user enters the new password, making use of the system (1) of the user;
- the user validates the new password, making use of the system (1) of the user;
- the user password verifier is cryptographically derived from the new password;
- the user password verifier is transmitted to the electronic letter service (2) and stored on a storage medium of the electronic letter service (2), a process in which the old user password verifier is replaced;
- the encrypted user master secret is retrieved by the electronic letter service (2);
- the encrypted user master secret is transmitted by the electronic letter service (2) to the system (1) of the user;
- a new user secret is cryptographically derived from the new password;
- the user master secret is decrypted with the old user secret;
- the user master secret is encrypted with the new user secret;
- the newly encrypted user master secret is transmitted to the electronic letter service (2);
- the newly encrypted user master secret is stored on a storage medium of the electronic letter service (2), a process in which the old user master secret is replaced.

7. The method for resetting the password for securely transmitting a digital message by means of an electronic letter service (2) according to one of the preceding claims,
**characterized by the following steps**
- the user requests an unlocking password;
- an unlocking password is cryptographically generated in the electronic letter service (2);
- the cryptographic unlocking password is delivered to the user by regular mail;
- the user logs in to the portal of the electronic letter service (2) with the unlocking password;
- the unlocking password is transmitted to the electronic letter service (2);
- the unlocking password is checked in the electronic letter service (2);
- if the unlocking password has been entered correctly, feedback is sent by the electronic letter service (2) to the system (1) of the user indicating that the unlocking password is correct, and a prompt to enter a new password is displayed, otherwise, feedback is sent by the electronic letter service (2) to the system (1) of the user indicating that the unlocking password is not correct and the procedure returns to the step in which the user is prompted to enter the unlocking password, whereby the procedure is aborted after three incorrect entries;
- the new password is entered by the user, making use of his/her browser;
- the new password is validated by the user, making use of his/her browser;
- a new user password verifier is cryptographically derived from the new password;
- the user password verifier is transmitted to the electronic letter service (2) and stored on a storage medium of the electronic letter service (2), a process in which the old user password verifier is replaced;
- a new user secret is cryptographically derived from the new password in the browser of the user;
- the new user sender secret is encrypted using the public key of the TrustCenter (3);
- the encrypted user sender secret is transmitted to the electronic letter service (2)
- a request for key recovery with the user ID of the user is sent by the electronic letter service (2) to the TrustCenter (3);
- a hash value is derived from the user ID in the TrustCenter (3);
- the encrypted user master secret is sought using the hash value of the user ID in the TrustCenter (3);
- after having been found, the encrypted user master secret is decrypted with the user ID in the TrustCenter (3);
- the new user secret is decrypted in the TrustCenter (3) using the private key of the TrustCenter (3);
- the user master secret is encrypted with the new user secret in the TrustCenter (3);
- the newly encrypted user master secret is transmitted by the TrustCenter (3) to the electronic letter service (2);
- the encrypted user master secret is replaced in the electronic letter service (2);
- the newly encrypted user master secret is transmitted by the electronic letter service (2) to the system (1) of the user.

8. A method for displaying encrypted attachments in a digital message that has been transmitted by means of a secure transmission according to one of the preceding claims,
**characterized by the following steps**
- the message is displayed in the browser of the user, whereby the user is informed that the message contains an attachment;
- the user requests the attachment from the electronic letter service (2);
- the encrypted attachment is transmitted by the electronic letter service (2) to the system (1) of the user;
- the encryption is recognized by the browser of the user and the encrypted user master secret is requested from the storage medium of the electronic letter service (2);
- the encrypted user master secret is transmitted from the storage medium of the electronic letter (2) service to the system (1) of the user;
- the user master secret is decrypted with the user secret in the browser of the user;
- the attachment is decrypted with the user master secret in the browser of the user;
- the attachment is displayed in plain text in the browser of the user.

9. A method for displaying a digital encrypted message that has been transmitted by means of a secure transmission according to one of claims 1 to 8, whereby the encrypted message contains an unencrypted message header,
**characterized by the following steps**
- the message header is displayed in the browser of the user, whereby the user is informed that the message itself is encrypted;
- the encrypted user master secret is requested from the storage medium of the electronic letter service (2);
- the encrypted user master secret is transmitted from the storage medium of the electronic letter service (2) to the system (1) of the user;
- the encrypted user master secret is decrypted with the user secret in the browser of the user;
- the message with the user master secret is decrypted in the browser of the user; and
- the message is displayed in plain text in the browser of the user.

10. The method for securely transmitting a digital message by means of an electronic letter service (2) according to one of the preceding claims,
**characterized in that**
a sender encrypts the digital message while it is still within his/her sphere of control, the encrypted document is transmitted in encrypted form to a recipient on his/her system (1), where it is decrypted.

11. The method for securely transmitting a digital message by means of an electronic letter service (2) according to claim 1,
**characterized in that**
the public key is provided with a certificate in the TrustCenter (3), and this certificate, together with the encrypted user master secret, is forwarded by the TrustCenter (3) to the electronic letter service (2), where is it stored in the recipient master data.

12. The method for securely transmitting a digital message by means of an electronic letter service (2) according to claim 1,
**characterized in that**
the sender encrypts the digital message using the public key of the recipient.

13. The method for securely transmitting a digital message by means of an electronic letter service (2) according to claim 11, whereby the sender creates a user name and a password,
**characterized in that**
the sender provides a sender public key that, together with his/her user name and password, is transmitted to the electronic letter service (2), whereby the electronic letter service (2) assigns a sender ID to the sender and transmits the sender public key, the user ID and the sender ID to the TrustCenter (3), where a user sender secret is calculated from the sender ID and from the user master secret that was stored for the submitted user ID, and subsequently encrypted using the sender public key, whereby the encrypted user secret is transmitted to the electronic letter service (2), and from there, to the system (4) of the sender.

14. The method for securely transmitting a digital message by means of an electronic letter service (2) according to claim 1,
**characterized in that**
the sender encrypts the digital message with the user sender secret.

15. The method for securely transmitting a digital message by means of an electronic letter service (2) according to claim 1,
**characterized in that**
the sender ID as meta data, along with the encrypted message, is supplied by the system of the sender (4) to the system of the recipient (1), where the user sender secret is derived from the user master secret and from the sender ID, so that the message can subsequently be decrypted with it.

## Revendications

1. Procédé de transmission sécurisée d'un message numérique au moyen d'un service postal électronique (2), un utilisateur du service disposant d'un système (1) avec un ordinateur avec un navigateur capable de tourner dessus et une connexion à l'internet et le service postal électronique (2) utilisant un centre de confiance (3), un procédé de cryptage asymétrique étant installé sur le centre de confiance (3), comportant les étapes suivantes :
fixation d'un mot de passe par l'utilisateur en utilisant le système (1) de l'utilisateur ;
dérivation cryptographique d'un vérificateur de mot de passe d'utilisateur à partir du mot de passe ;
transmission du vérificateur de mot de passe d'utilisateur au service postal électronique (2) et sauvegarde du vérificateur de mot de passe d'utilisateur sur un support de mémoire du service postal électronique (2),
le procédé étant **caractérisé par** les étapes suivantes :
dérivation cryptographique d'un secret d'utilisateur à partir du mot de passe ;
cryptage du secret d'utilisateur avec la clé publique du centre de confiance (3) ;
transmission du secret d'utilisateur crypté au service postal électronique (2) ;
transmission du secret d'utilisateur crypté du service postal électronique (2) au centre de confiance (3), le service postal électronique (2) envoyant au centre de confiance (3) un appel de fonction pour générer un secret maître d'utilisateur ;
décryptage du secret d'utilisateur dans le centre de confiance (3) ;
génération du secret maître d'utilisateur dans le centre de confiance (3) ;
génération d'un identifiant d'utilisateur dans le centre de confiance (3) ;
cryptage du secret maître d'utilisateur avec le secret d'utilisateur dans le centre de confiance (3) ;
transmission de l'identifiant d'utilisateur et du secret maître d'utilisateur crypté avec le secret d'utilisateur du centre de confiance (3) au service postal électronique (2) ;
sauvegarde, dans le service postal électronique (2), de l'identifiant d'utilisateur et du secret maître d'utilisateur crypté avec le secret d'utilisateur.

2. Procédé de transmission sécurisée d'un message numérique au moyen d'un service postal électronique (2) selon la revendication 1, **caractérisé en ce que** :
après le cryptage du secret maître d'utilisateur avec le secret d'utilisateur dans le centre de confiance (3), le secret maître d'utilisateur est crypté avec l'identifiant d'utilisateur dans le centre de confiance (3) ;
une valeur de hachage est ensuite dérivée de l'identifiant d'utilisateur dans le centre de confiance (3) ;
le secret maître d'utilisateur crypté et la valeur de hachage dérivée de l'identifiant d'utilisateur sont ensuite sauvegardés dans le centre de confiance (3) ; et
le secret maître d'utilisateur non crypté et l'identifiant d'utilisateur sont ensuite effacés dans le centre de confiance (3).

3. Procédé selon l'une des revendications précédentes, **caractérisé en ce que** le service postal électronique (2) est accessible via un portail sur l'internet, le portail mettant à disposition un masque de connexion dans lequel peuvent être introduits le nom de l'utilisateur et un mot de passe d'utilisateur.

4. Procédé selon l'une des revendications précédentes, **caractérisé en ce que** le nom de l'utilisateur et le vérificateur de mot de passe d'utilisateur sont transmis du système (1) de l'utilisateur au service postal électronique (2) via un procédé basé sur le principe Challenge-Response.

5. Procédé selon la revendication 5, **caractérisé en ce que** le nom de l'utilisateur et le vérificateur de mot de passe d'utilisateur sont transmis du système (1) de l'utilisateur au service postal électronique (2) via le procédé SRP.

6. Procédé de modification de mot de passe pour la transmission sécurisée d'un message numérique au moyen d'un service postal électronique (2) selon l'une des revendications précédentes,
**caractérisé par** les étapes suivantes :
introduction du nouveau mot de passe par l'utilisateur en utilisant le système (1) de l'utilisateur ;
validation du nouveau mot de passe par l'utilisateur en utilisant le système (1) de l'utilisateur ;
dérivation cryptographique du vérificateur de mot de passe d'utilisateur à partir du nouveau mot de passe ;
transmission du vérificateur de mot de passe d'utilisateur au service postal électronique (2) et sauvegarde du vérificateur de mot de passe d'utilisateur sur un support de mémoire du service postal électronique (2) avec remplacement de l'ancien vérificateur de mot de passe d'utilisateur ;
consultation du secret maître d'utilisateur crypté par le service postal électronique (2) ;
transmission du secret maître d'utilisateur crypté du service postal électronique (2) au système (1) de l'utilisateur ;
dérivation cryptographique d'un nouveau secret d'utilisateur à partir du nouveau mot de passe ;
décryptage du secret maître d'utilisateur avec l'ancien secret d'utilisateur ;
cryptage du secret maître d'utilisateur avec le nouveau secret d'utilisateur ;
transmission du secret maître d'utilisateur nouvellement crypté au service postal électronique (2) ;
sauvegarde du secret maître d'utilisateur nouvellement crypté sur un support de mémoire du service postal électronique (2) avec remplacement de l'ancien secret maître d'utilisateur.

7. Procédé de réinitialisation de mot de passe pour la transmission sécurisée d'un message numérique au moyen d'un service postal électronique (2) selon l'une des revendications précédentes,
**caractérisé par** les étapes suivantes :
demande d'un mot de passe de déverrouillage par l'utilisateur ;
génération cryptographique d'un mot de passe de déverrouillage dans le service postal électronique 2 ;
notification du mot de passe de déverrouillage cryptographique à l'utilisateur par voie postale ;
connexion de l'utilisateur au portail du service postal électronique (2) avec le mot de passe de déverrouillage ;
transmission des mot de passe de déverrouillages an den service postal électronique (2) ;
vérification du mot de passe de déverrouillage dans le service postal électronique (2) ;
si le mot de passe de déverrouillage a été introduit correctement, réponse du service postal électronique (2) au système (1) de l'utilisateur pour dire que le mot de passe de déverrouillage est correct et affichage d'une invitation à introduire un nouveau mot de passe, sinon, réponse du service postal électronique (2) au système (1) de l'utilisateur pour dire que le mot de passe de déverrouillage n'est pas correct et retour à l'invitation à introduire le mot de passe de déverrouillage, le procédé étant interrompu après trois introductions incorrectes ;
introduction du nouveau mot de passe par l'utilisateur en utilisant le navigateur de l'utilisateur ;
validation du nouveau mot de passe par l'utilisateur en utilisant le navigateur de l'utilisateur ;
dérivation cryptographique d'un nouveau vérificateur de mot de passe d'utilisateur à partir du nouveau mot de passe ;
transmission du vérificateur de mot de passe d'utilisateur au service postal électronique (2) et sauvegarde du vérificateur de mot de passe d'utilisateur sur un support de mémoire du service postal électronique (2) avec remplacement de l'ancien vérificateur de mot de passe d'utilisateur ;
dérivation cryptographique d'un nouveau secret d'utilisateur à partir du nouveau mot de passe dans le navigateur de l'utilisateur ;
cryptage du nouveau secret d'utilisateur avec la clé publique du centre de confiance (3) ;
transmission du secret d'utilisateur crypté au service postal électronique (2) ;
envoi d'une invitation en vue d'une récupération de clé avec l'identifiant d'utilisateur de l'utilisateur du service postal électronique (2) au centre de confiance (3) ;
dérivation d'une valeur de hachage à partir de l'identifiant d'utilisateur dans le centre de confiance (3) ;
recherche du secret maître d'utilisateur crypté avec la valeur de hachage de l'identifiant d'utilisateur dans le centre de confiance (3) ;
lorsque le secret maître d'utilisateur crypté est trouvé, décryptage du secret maître d'utilisateur avec l'identifiant d'utilisateur dans le centre de confiance (3) ;
décryptage du nouveau secret d'utilisateur avec la clé privée du centre de confiance (3) dans le centre de confiance (3) ;
cryptage du secret maître d'utilisateur avec le nouveau secret d'utilisateur dans le centre de confiance (3) ;
transmission du nouveau secret maître d'utilisateur crypté du centre de confiance (3) au service postal électronique (2) ;
remplacement du secret maître d'utilisateur crypté dans le service postal électronique (2) ;
transmission du nouveau secret maître d'utilisateur crypté du service postal électronique (2) au système (1) de l'utilisateur.

8. Procédé d'affichage d'annexes cryptées dans un message numérique transmis au moyen d'une transmission sécurisée selon l'une des revendications précédentes, **caractérisé par** les étapes suivantes :
le message est affiché dans le navigateur de l'utilisateurs, le fait que le message contient une annexe étant affiché pour l'utilisateur ;
consultation de l'annexe par l'utilisateur auprès du service postal électronique (2) ;
transmission de l'annexe cryptée du service postal électronique (2) au système (1) de l'utilisateur ;
reconnaissance du cryptage par le navigateur de l'utilisateur et demande du secret maître d'utilisateur crypté au support de mémoire du service postal électronique (2) ;
transmission du secret maître d'utilisateur crypté du support de mémoire du service postal électronique (2) au système (1) de l'utilisateur ;
décryptage du secret maître d'utilisateur avec le secret d'utilisateur dans le navigateur de l'utilisateur ;
décryptage de l'annexe avec le secret maître d'utilisateur dans le navigateur de l'utilisateur ;
affichage de l'annexe en texte clair dans le navigateur de l'utilisateur.

9. Procédé d'affichage d'un message crypté transmis au moyen d'une transmission sécurisée selon l'une des revendications 1 à 8, le message crypté contenant un en-tête de message non crypté,
**caractérisé par** les étapes suivantes :
l'en-tête de message est affiché dans le navigateur de l'utilisateur, le fait que le message lui-même est crypté étant affiché pour l'utilisateur ;
le secret maître d'utilisateur crypté est demandé au support de mémoire du service postal électronique (2) ;
le secret maître d'utilisateur crypté est transmis du support de mémoire de service postal électronique (2) au système (1) de l'utilisateur ;
le secret maître d'utilisateur crypté est décrypté avec le secret d'utilisateur dans le navigateur de l'utilisateur ;
le message est décrypté avec le secret maître d'utilisateur dans le navigateur de l'utilisateur et
le message est affiché en texte clair dans le navigateur de l'utilisateur.

10. Procédé de transmission sécurisée d'un message numérique au moyen d'un service postal électronique (2) selon l'une des revendications précédentes, **caractérisé en ce qu'**un émetteur crypte le message numérique dans sa sphère d'influence, le document crypté est transmis à un récepteur sous forme cryptée sur son système (1) et y est décrypté.

11. Procédé de transmission sécurisée d'un message numérique au moyen d'un service postal électronique (2) selon la revendication 1, **caractérisé en ce qu'**une clé publique est pourvue d'un certificat dans le centre de confiance (3) et ce certificat est retransmis avec le secret maître d'utilisateur crypté du centre de confiance (3) au service postal électronique (2) où il est déposé dans les données de base du récepteur.

12. Procédé de transmission sécurisée d'un message numérique au moyen d'un service postal électronique (2) selon la revendication 1, **caractérisé en ce que** l'émetteur crypte le message numérique avec la clé publique du récepteur.

13. Procédé de transmission sécurisée d'un message numérique au moyen d'un service postal électronique (2) selon la revendication 11, l'émetteur déterminant un nom d'utilisateur et un mot de passe, **caractérisé en ce que** l'émetteur fournit une clé publique d'émetteur qui est transmise au service postal électronique (2) avec son nom d'utilisateur et son mot de passe, le service postal électronique (2) affectant un identifiant d'émetteur à l'émetteur et transmettant la clé publique d'émetteur, l'identifiant d'utilisateur et un identifiant d'émetteur au centre de confiance (3), un secret émetteur d'utilisateur étant calculé dans le centre de confiance (3) à partir du secret maître d'utilisateur stocké pour l'identifiant d'utilisateur transmis et à partir de l'identifiant d'émetteur, puis crypté avec la clé publique d'émetteur, le secret émetteur d'utilisateur crypté étant transmis au service postal électronique (2) et, de là, au système (4) de l'émetteur.

14. Procédé de transmission sécurisée d'un message numérique au moyen d'un service postal électronique (2) selon la revendication 1, **caractérisé en ce que** l'émetteur crypte le message numérique avec le secret émetteur d'utilisateur.

15. Procédé de transmission sécurisée d'un message numérique au moyen d'un service postal électronique (2) selon la revendication 1, **caractérisé en ce que** l'identifiant d'émetteur est également fourni, en tant que métadonnée avec le message crypté, par le système de l'émetteur (4) au système du récepteur (1) où le secret émetteur d'utilisateur est dérivé du secret maître d'utilisateur et de l'identifiant d'émetteur pour ensuite décrypter le message avec celui-ci.
